# EUROPEAN PATENT SPECIFICATION

(11) **EP 3 084 501 B1**
(45) Date of publication and mention of the grant of the patent: **12.07.2023**
(21) Application number: 14825442.8
(22) Date of filing: 22.12.2014
(51) Int. Cl.: G02B 21/00, G02B 21/10, G02B 21/16, G02B 21/24

(54) **LIGHT SOURCE ADAPTOR FOR A MICROSCOPE**
LICHTQUELLENADAPTER FÜR EIN MIKROSKOP
ADAPTATEUR DE SOURCE DE LUMIÈRE POUR UN MICROSCOPE

(30) Priority: 21.12.2013 GB 201322822
(43) Date of publication of application: 26.10.2016
(73) Proprietor: Oxford University Innovation Limited, Botley Oxford OX2 0JB (GB)
(72) Inventor: BERRY, Richard, Oxford, Oxfordshire OX2 7SG (GB); ISHMUKHAMETOV, Robert, Oxford, Oxfordshire OX2 7SG (GB); RUSSELL, Aidan, Oxford, Oxfordshire OX2 7SG (GB)
(74) Representative: J A Kemp LLP
(86) International application number: PCT/IB2014/067229
(87) International publication number: WO 2015/092778

(56) References cited:
- US-A- 2 128 394
- US-A- 2 471 879
- US-A- 5 198 927
- US-A1- 2003 090 792
- US-A1- 2012 062 987

## Description

The present invention relates a microscope system comprising a microscope and an adaptor.

Dark-field microscopy ('DFM') is a well-known technique for imaging small objects which cannot be seen using bright-field microscopy. In dark-field microscopy, the sample is illuminated with a shaped beam, and the transmitted or returned light is blocked by a suitable beam stop, only allowing scattered light from the sample to reach a detector. Conventionally DFM uses a forward-scatter configuration, in which an annular illumination beam is used to illuminate the sample, and directly transmitted light is blocked by the aperture of the microscope objective, so that only scattered light forms a dark field image. Dark-field microscopes have been proposed which operate in a back-scatter configuration, but in each case custom-built microscope systems are required.
US2012/0062987A1 and US5198927 disclose adaptors for use in transforming a light microscope into a fluorescent microscope. US2128394 discloses a microscope for use in making measurements of optical constants in opaque anisotropic materials.
US2003/090792A1 discloses a device for introducing laser energy into the optical path of a microscope.

According to a first aspect of the invention there is provided a microscope system comprising: a microscope comprising an objective lens arranged to focus light onto an object plane, wherein a sample may be arranged in the object plane; a detector for detecting light; a tube lens configured to focus light scattered or reflected from the object plane on the detector; an accessory slot; and an adapter comprising a support part received in the accessory slot of the microscope, the support part having a plate shaped to be received in the accessory slot and an aperture arranged so that light scattered from a sample, when arranged in the object plane, and light reflected from glass-air or glass-liquid interfaces in or near the object plane, passes through the aperture for forming an image on the detector, a light source element comprising a mount for an optical fibre connected to a light source, and a mirror mounted on the support part in a part of the aperture, wherein the mirror is arranged to direct light from the optical fibre towards the objective lens, and the mirror is arranged to block reflected light so that at least part of the image formed on the detector is a shadowed area in which the image is a back-scattered dark-field image.

In some embodiments, a first part of the image formed on the detector is a shadowed area in which the image is a back-scattered dark-field image and a second part of the image formed on the detector is a non-shadowed area for use in thin-film interference reflectance microscopy or reflection interference contrast microscopy.

In other embodiments, the entire image formed on the detector is a shadowed area in which the image is a back-scattered dark-field image.

The mount may be adjustable relative to the support part. The adaptor may further comprise focusing optics to focus light from the optical fibre.

The mirror may be mounted at approximately 45° to the support part.

The mirror may comprise a rod having an angled reflective end surface.

The mirror may be supported on an arm extending from a wall of the aperture.

The support part may have a beam channel extending longitudinally of the support part from the light source element to the aperture and being aligned with the mirror for passing light from the light source element to the mirror.

An embodiment of the invention is described by way of example only with reference to the accompanying drawings, wherein;

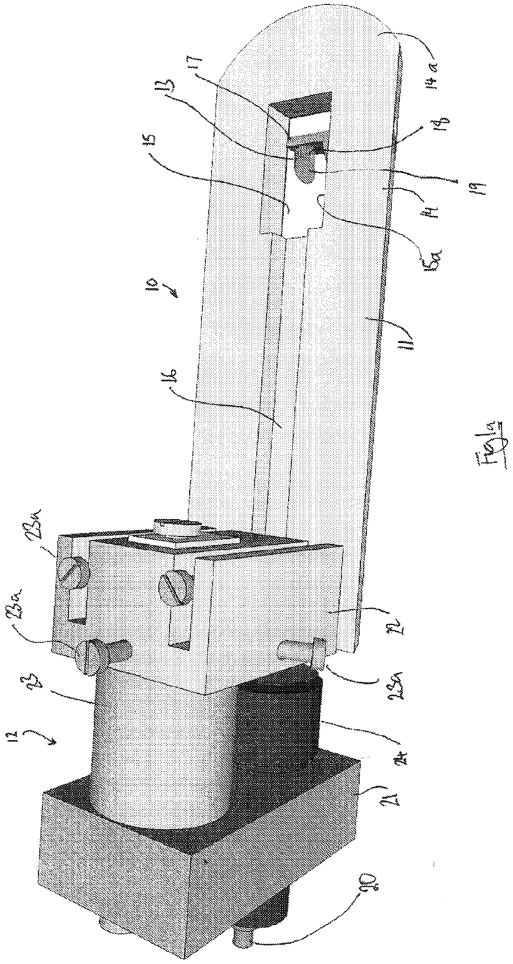

Fig. 1a is a perspective view of an adaptor used in the present invention,

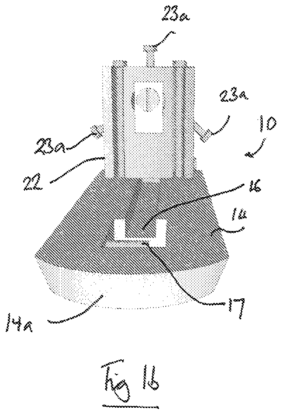

Fig. 1b is an end perspective view of the adaptor of Fig. 1a,
Fig. 2 is a perspective view of the adaptor of Fig. 1a mounted in an accessory slot of an objective holder,
Fig. 3a is a perspective view of the adaptor of Fig. 1a showing the path of an illuminating light beam,
Fig. 3b is a view of the adaptor of Fig. 1a from the underside, and
Fig. 4 is a perspective view of the adaptor of Fig. 1a and an objective lens, showing the light paths through the adaptor and lens,
Fig. 5a is a ray diagram illustrating formation of the dark field image,
Fig. 5b is a ray diagram illustrating formation of an interference reflectance image,
Fig. 6 is a diagram showing an embodiment for use in epifluorescence microscopy, and
Fig. 7 is a diagram showing an embodiment for use in dark field surface reflection microscopy.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

Referring now to Figs, la and lb, an adaptor in accordance with the present disclosure is generally shown at 10. The adaptor 10 comprises a support part 11, a light source element 12 and a mirror 13. The support part 11 comprises an elongate, generally planar plate 14. In this example the plate 14 is generally rectangular in plan view, and, as shown in Fig. la, is generally trapezoidal in cross-section, with a rounded end 14a to facilitate locating the support part 11 in an accessory slot. The exact shape and dimensions of the plate 14 are selected to allow the adaptor 10 to be used with a desired type or range of microscopes. An aperture 15 is disposed within the support part 11, located such that when the adaptor 10 is in position in a microscope, light scattered from a sample will pass through aperture 15 and be received in at a detection apparatus. A beam channel 16 extends longitudinally of the support part 11 from the light source element 12 to the aperture 15, aligned with the mirror 13. In this example, the mirror 13 is supported on an arm 17 extending from a side wall 15a of the aperture 15.

The mirror 13 comprises a rod 18 with an angled mirrored end face 19. The end face is at an angle of approximately 45° to the support part 11. The mirror has an area of approximately 3mm² in this example (as the rod 18 has a diameter of 2mm), but larger greater or smaller diameter mirrors may be used. As discussed below, the rod 18 advantageously can block unwanted scattered or reflected incident light, from the sample or planar interfaces, depending on the particular application.

The light source element 12 in this example comprises a support for an end of an optical fibre 20 connected to a suitable light source (not shown). The light source may be an incandescent source connected to a multimode fibre, but for some applications a laser light source coupled to the adaptor 10 via a single-mode optical fibre may be desirable, and advantageously a suitable light source and optical fibre may be selected depending on the desired application. It will be apparent that the system may be used for fluorescence applications as described below, by using a suitable source and detector.

The light source element 12 in Fig. la comprises a support block 21 connected to an adjustment block 22 via rod 23. The adjustment block 22 is connected to the support part 11, and the rod 23 is adjustable relative to the adjustment block 22 by screws 23a, to allow the beam alignment to be controllably adjusted, in this example to provide x- and y-positioning of the beam, and also controlling the beam angle. Beam shaping and focussing optics are supported on the support block 21 as generally shown at 24. In this example, the focussing optics 24 comprise a two-lens system to collimate the beam received from optical fibre 20 and focus the beam at the back focal plane of an objective lens to evenly illuminate a sample at the focus of the objective lens.

The support part 11, and in particular the plate 14, is shaped to be received in an accessory slot of a conventional or commercially-available microscope, and in particular a bright-field microscope. The accessory slot may be a DIC slot and in particular an objective prism slot of known type. In this example, the support part 11 has a width of 20mm and a length of 60mm. The adjustment block 22 is shaped and dimensioned so as not to interfere with any part of the microscope when the support part is received in an accessory slot, in this example having a height of 3.74mm, a depth of 32mm and a width of 20mm. The aperture has a width of 7mm and a length of 13mm, although these dimensions are not constrained by the accessory slot. As mentioned above, the shape and size of the plate 14 may be selected to fit the accessory slot for microscopes of a particular type or from a particular manufacturer. Using the DIC slot in this way takes advantage of the DIC slot's easy accessibility and close proximity to the objective, which may minimize signal loss.

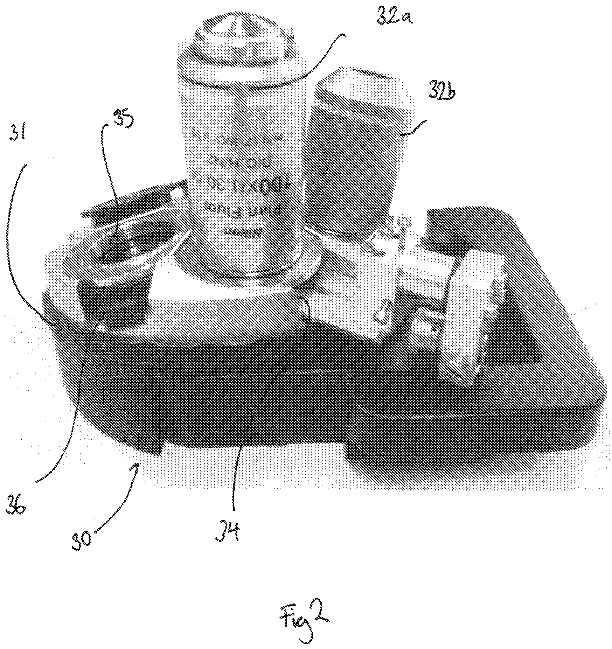

An adaptor 10 positioned in an accessory slot is shown in Fig.2. An objective holder is shown at 30 having a rotatable turret 31 on which a number of objective lenses 32a, 32b are mounted. An accessory slot 34 is visible below objective lens 32a. The support part 11 of adaptor 12 is located within the accessory slot 34. A threaded connection for a further objective lens is shown at 35 with an accessory slot containing below it at 36.

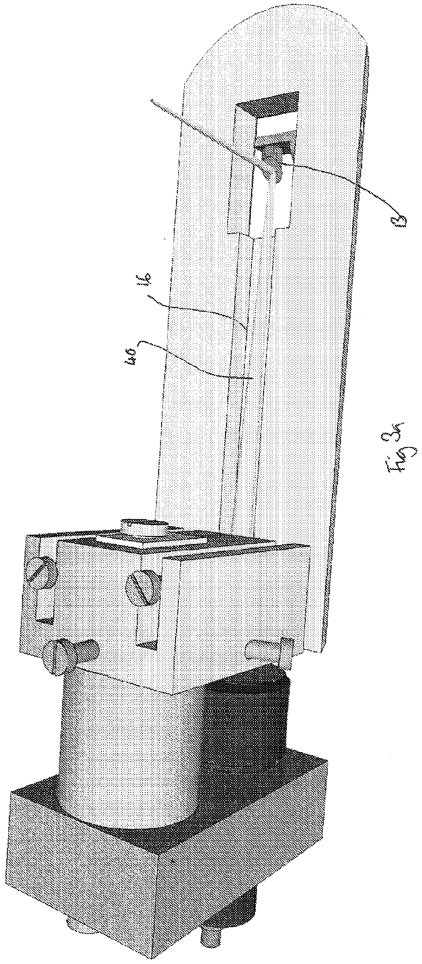

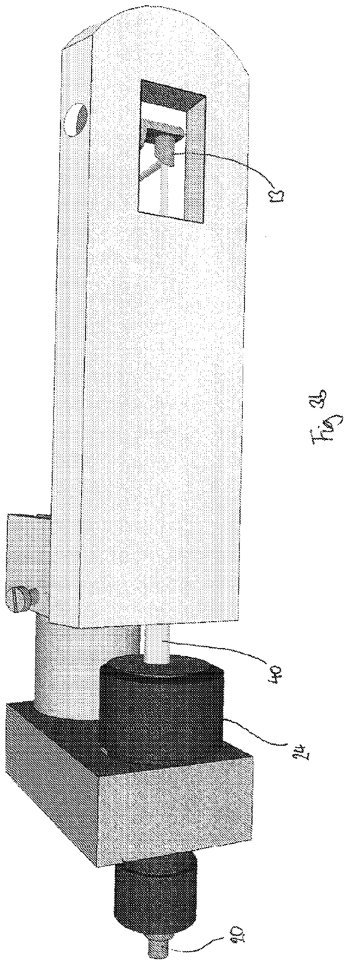

The path of an illuminating beam through the adaptor 10 is shown at 40 in Figs 3a and 3b. Light from optical fibre 20 is collimated and focused by optics 24 and passes along beam channel 16. The beam 40 is directed upwardly at approximately 90° to its original direction towards an objective lens.

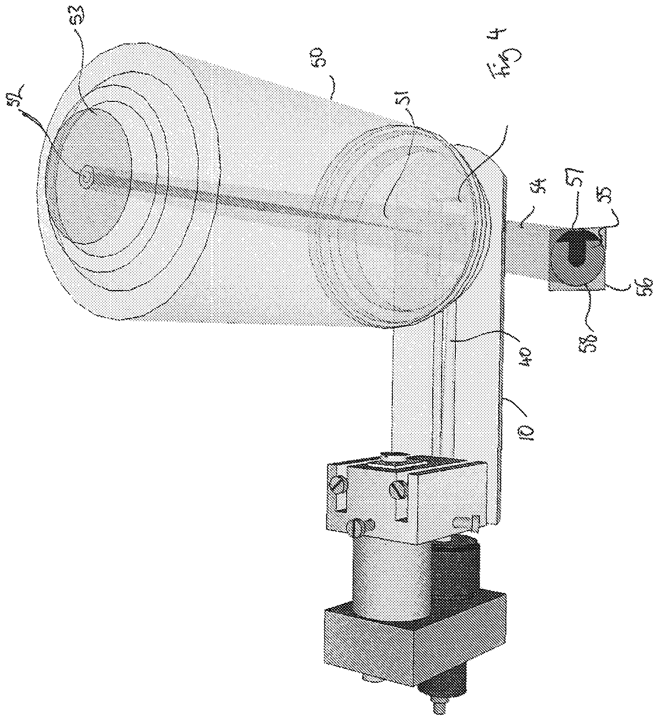

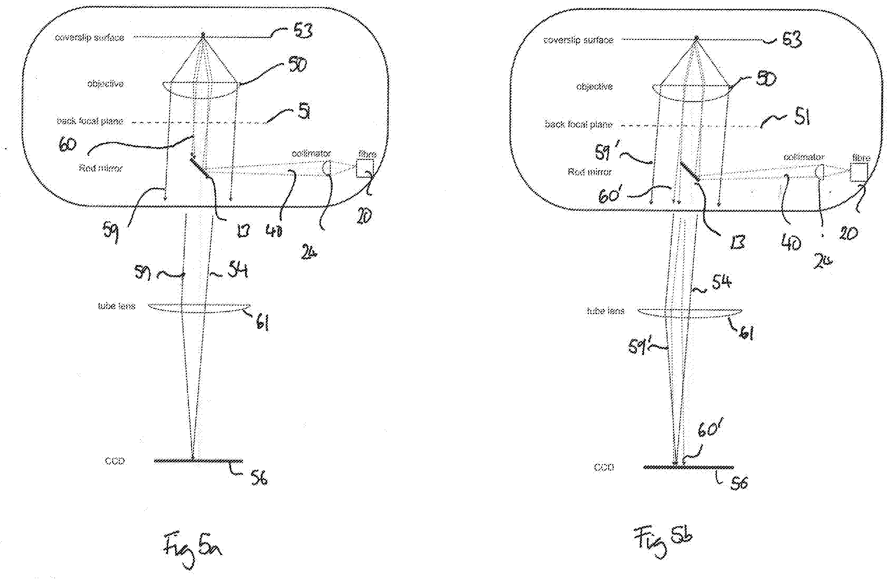

The adaptor 10 is shown together with an objective lens 50 in Fig. 4, and the light paths through the objective lens shown in Figs. 5a and 5b. As described above, beam 40 is focused at the back focal plane 51 of the objective lens 50 to evenly illuminate a sample 52 in the object plane 53. Light scattered from sample 52, as well as light reflected from glass-air or glass-liquid interfaces in or near plane 53 is shown at 54, and passes through aperture 15 to form image 55 at detector 56. The detector 56 is any suitable detection or imaging apparatus, for example a CMOS, CCD or EMCCD camera.

As is apparent in Fig.4, the image 55 comprises a first part 57 in which light reflected from surfaces or interfaces other than the sample, for example a cover slip surface, is blocked by the mirror 13. This allows the adaptor 10 to be used for back-scattering dark field microscopy. The light paths forming the first part 57 are shown in Fig.5a. Light scattered from the sample passes the mirror 13 as shown by paths 59, and is focused on the detector 56 by tube lens 61 while light reflected from the coverslip surface is blocked by the mirror 13 as shown by paths 60. Within this shadowed area, only light scattered from the sample is imaged, forming a dark field image. The mirror size and fibre core size can be selected as desirable to maximise the size of the dark field area. For example, for a 2- mm diameter mirror and 25 µm-core fibre, most of the area of the image is occupied by the dark field because substantially all the peripheral rays are blocked by the mirror.

The image 55 also comprises a second part 58 which is not shadowed by the mirror. As illustrated in Fig. 5b, both scattered and reflected light is focused by tube lens 61 and imaged at the detector, as shown by paths 59', 60'. Advantageously, this area may be used for thin-film interference reflectance microscopy, or reflection interference contrast microscopy ("RIC"). Interference between reflected light from spatially close interfaces, such as glass/medium, medium/membrane or membrane/cyctoplasm interfaces, or from different surfaces of a film, will form interference patterns in this area of the image. To increase the interference zone, the mirror size and fibre core size can be selected. For example, for a 1 mm diameter mirror and 50 µm-core fibre, the area of the image occupied by the interference zone is larger than the dark field area.

The size and position of the shadowed area, first part 57, may optionally by varied by changing the size or shape of the mirror 13 or rod 18, or indeed the size, position or shape of the support arm 17, and the diameter of the optical fibre 20. Light emerging from the light source closer to the optical axis will cast a larger shadow for a given size of mirror than light emerging from the light source further from the optical axis. In the limiting case where the light source approximates to a point source, as in the case of a single-mode optical fibre or focussed laser beam, the entire image will be in the shadow and a fully dark-field microscope is achieved. In the example where a multimode optical fibre is used, the peripheral rays will be disposed further from the optical axis, will not be blocked by the mirror and will form a larger second part 58 in the field of view. In an example, a 2mm-diameter mirror occupies an area 160 µm by 20 µm in a 220 µm by 220 µm field of view with a 100x objective lens.

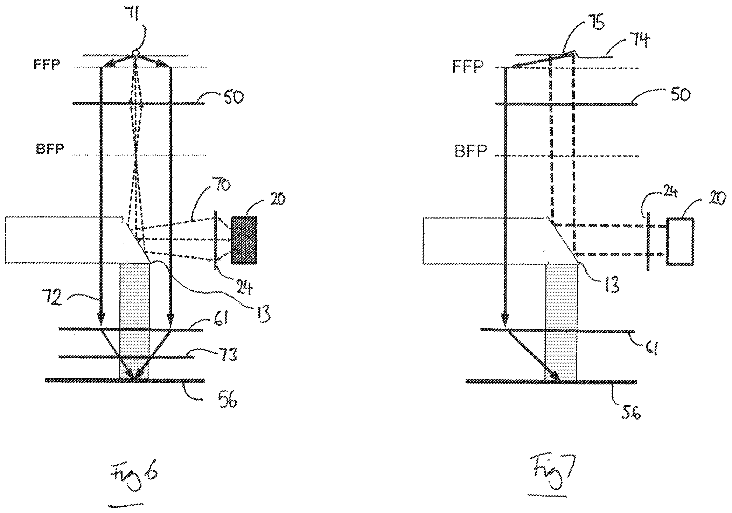

Adaptation of the adaptor 10 and microscope to carry out a fluorescence technique, specifically epifluoresence is shown in figure 6. Conventionally, epifluorescence requires a source of excitation light and a filter cube assembled of either two (a dichroic mirror and an emission filter for narrow-band excitation by lasers or LEDs) or three filters (an additional emission filter for broad-band excitation by mercury or xenon lamps).The adaptor 10 can be used instead of a filter cube in epi-fluorescent applications when complimented by a narrow-band LED for fluorescence excitation. Excitation light 70 from a narrowband LED is transmitted by optical fibre 20. The mirror 13 directs the light 70 to sample 71. The sample 71 fluoresces and the fluorescent signal 72 passes the mirror 13 and support arm 17 and is focused on the detector 56. Reflected excitation light is blocked by the mirror 13 and support arm 17. If necessary, an emission filter 73 may be provided to block strong back-scattering from the sample 71. For example, poorly scattering objects can be studied without any filters, while for strongly back-scattering objects the emission filter may be required.

As illustrated in figure 7, the adaptor 10 and microscope can be used for dark field surface reflection microscopy ("DFSR"). Conventionally, DFSR needs a special reflected light dark field mirror cube and special objectives. Such objectives are constructed to accommodate an additional light pass inside the objective barrel to form oblique hollow cone illumination of the surface and designed to be used on dry surfaces, without the coverslip and immersion. Standard transmitted light objectives used in life sciences are not suitable for DFSR applications. However, the adaptor described above permits DFSR applications with a standard transmitted light microscope with regular transmitted light objectives, which can be used to test the surface of interest without a coverslip, without the need to use a special industrial objective. As illustrated in figure 7, surface 74 is generally flat with relief features shown at 75. Rays reflected off the flat surface are blocked by the mirror, while rays 76 reflected off the relief surface features 74 enter the objective under larger angle, bypass the mirror 13 and form an image at detector 56.

The adaptor described herein is advantageous in that it provides a very simple and inexpensive way to adapt a standard microscope to various back-scattering and/or epifluorenscent operations by taking advantage of a standard accessory slot. The adaptor itself is compact and inexpensive. The illumination light can easily be changed or adapted by virtue of the optical fibre connection to the adaptor.

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination.

Furthermore, it is to be understood that the invention can be carried out or practiced in various ways and that the invention can be implemented in embodiments other than the ones outlined in the description above.

Meanings of technical and scientific terms used herein are to be commonly understood as by one of ordinary skill in the art to which the invention belongs, unless otherwise defined.

## Claims

1. A microscope system comprising:
a microscope comprising
an objective lens (50) arranged to focus light onto an object plane (53), wherein a sample (52) may be arranged in the object plane (53);
a detector (56) for detecting light;
a tube lens (61) configured to focus light scattered or reflected from the object plane (53) on the detector (56);
an accessory slot (34); and
an adapter (10) comprising
a support part (11) received in the accessory slot (34) of the microscope, the support part (11) having a plate (14) shaped to be received in the accessory slot (34) and an aperture (15) arranged so that light scattered from a sample (52), when arranged in the object plane (53), and light reflected from glass-air or glass-liquid interfaces in or near the object plane (53), passes through the aperture (15) for forming an image on the detector (56),
a light source element (12) comprising a mount for an optical fibre (20) connected to a light source,
focussing optics (24) arranged to focus light from the optical fibre (20) at a back focal plane of the objective lens (20), and
a mirror (13) mounted on the support part (11) in a part of the aperture (15), wherein the mirror (13) is arranged to direct light from the optical fibre (20) towards the objective lens (50), and the mirror (13) is arranged to block reflected light so that at least part of the image formed on the detector (56) is a shadowed area (57) in which the image is a back-scattered dark-field image.

2. A microscope system according to claim 1, wherein a first part of the image formed on the detector (56) is a shadowed area (57) in which the image is a back-scattered dark-field image and a second part of the image formed on the detector (56) is a non-shadowed area (58) for use in thin-film interference reflectance microscopy or reflection interference contrast microscopy.

3. A microscope system according to claim 1, wherein the entire image formed on the detector (56) is a shadowed area (57) in which the image is a back-scattered dark-field image.

4. A microscope system according to any one of the preceding claims, wherein the mount is adjustable relative to the support part (11).

5. A microscope system according to any one of the preceding claims, further comprising a light source coupled to the light source element (12) of the adaptor by an optical fibre (20).

6. A microscope system according to any one of the preceding claims, wherein the mirror (13) is mounted at approximately 45° to the support part (11).

7. A microscope system according to any one of the preceding claims, wherein the mirror comprises a rod (18) having an angled reflective end surface.

8. A microscope system according to any one of the preceding claims, wherein the mirror (13) is supported on an arm extending from a wall of the aperture (15).

9. A microscope system according to any one of the preceding claims, wherein the support part (11) has a beam channel (16) extending longitudinally of the support part (11) from the light source element (12) to the aperture (15) and being aligned with the mirror (15) for passing light from the light source element (12) to the mirror (13).

## Patentansprüche

1. Mikroskopsystem, umfassend:
ein Mikroskop, umfassend
ein Objektiv (50), das angeordnet ist, um Licht auf eine Objektebene (53) zu fokussieren, wobei eine Probe (52) in der Objektebene (53) angeordnet sein kann;
einen Detektor (56) zum Erkennen von Licht;
eine Tubuslinse (61), die dazu konfiguriert ist, Licht, das von der Objektebene (53) gestreut oder reflektiert wird, auf den Detektor (56) zu fokussieren;
einen Zubehörschlitz (34); und
einen Adapter (10), umfassend
ein Trägerteil (11), das in dem Zubehörschlitz (34) des Mikroskops aufgenommen wird, wobei das Trägerteil (11) eine Platte (14) aufweist, die geformt ist, um in dem Zubehörschlitz (34) aufgenommen zu werden, und eine Apertur (15), die derart angeordnet ist, dass Licht, das von einer Probe (52) gestreut wird, wenn sie in der Objektebene (53) angeordnet ist, und Licht, das von Glas-Luft- oder Glas-Flüssigkeits-Grenzflächen in oder nahe der Objektebene (53) reflektiert wird, durch die Apertur (15) hindurchpassiert, um ein Bild auf dem Detektor (56) auszubilden,
ein Lichtquellenelement (12), das eine Halterung für eine optische Faser (20) umfasst, die mit einer Lichtquelle verbunden ist,
eine Fokussieroptik (24), die angeordnet ist, um Licht von der optischen Faser (20) auf eine hintere Brennebene des Objektivs (20) zu fokussieren, und
einen Spiegel (13), der an dem Trägerteil (11) in einem Teil der Apertur (15) montiert ist, wobei der Spiegel (13) angeordnet ist, um Licht von der optischen Faser (20) auf das Objektiv (50) zu richten, und der Spiegel (13) angeordnet ist, um reflektiertes Licht derart zu blockieren, dass wenigstens ein Teil des auf dem Detektor (56) ausgebildeten Bildes eine abgeschattete Fläche (57) ist, in der das Bild ein rückgestreutes Dunkelfeldbild ist.

2. Mikroskopsystem nach Anspruch 1, wobei ein erster Teil des auf dem Detektor (56) ausgebildeten Bildes eine abgeschattete Fläche (57) ist, in der das Bild ein rückgestreutes Dunkelfeldbild ist, und ein zweiter Teil des auf dem Detektor (56) ausgebildeten Bildes eine nicht abgeschattete Fläche (58) für die Verwendung in der Dünnschichtinterferenzreflexionsmikroskopie oder der Reflexioninterferenzkontrastmikroskopie ist.

3. Mikroskopsystem nach Anspruch 1, wobei das gesamte auf dem Detektor (56) ausgebildete Bild eine abgeschattete Fläche (57) ist, in der das Bild ein rückgestreutes Dunkelfeldbild ist.

4. Mikroskopsystem nach einem der vorhergehenden Ansprüche, wobei die Halterung relativ zu dem Trägerteil (11) anpassbar ist.

5. Mikroskopsystem nach einem der vorhergehenden Ansprüche, ferner umfassend eine Lichtquelle, die durch eine optische Faser (20) mit dem Lichtquellenelement (12) des Adapters gekoppelt ist.

6. Mikroskopsystem nach einem der vorhergehenden Ansprüche, wobei der Spiegel (13) in einem Winkel von etwa 45° zu dem Trägerteil (11) montiert ist.

7. Mikroskopsystem nach einem der vorhergehenden Ansprüche, wobei der Spiegel einen Stab (18) mit einer abgewinkelten reflektierenden Endoberfläche umfasst.

8. Mikroskopsystem nach einem der vorhergehenden Ansprüche, wobei der Spiegel (13) an einem Arm getragen wird, der sich von einer Wand der Apertur (15) aus erstreckt.

9. Mikroskopsystem nach einem der vorhergehenden Ansprüche, wobei das Trägerteil (11) einen Strahlenkanal (16) aufweist, der sich in Längsrichtung des Trägerteils (11) von dem Lichtquellenelement (12) zu der Apertur (15) erstreckt und an dem Spiegel (15) ausgerichtet ist, um Licht von dem Lichtquellenelement (12) zu dem Spiegel (13) zu passieren.

## Revendications

1. Système de microscope, comprenant :
un microscope comprenant
une lentille d'objectif (50) agencée pour focaliser de la lumière sur un plan d'objet (53), dans lequel un échantillon (52) peut être agencé dans le plan d'objet (53) ;
un détecteur (56) pour détecter de la lumière ;
une lentille de tube (61) configurée pour focaliser de la lumière, diffusée ou réfléchie depuis le plan d'objet (53), sur le détecteur (56) ;
une fente d'accessoire (34) ; et
un adaptateur (10) comprenant
une partie de support (11) reçue dans la fente d'accessoire (34) du microscope, la partie de support (11) ayant une plaque (14) façonnée pour être reçue dans la fente d'accessoire (34) et une ouverture (15) agencée pour que de la lumière, diffusée depuis un échantillon (52), lorsqu'il est agencé dans le plan d'objet (53), et de la lumière, réfléchie depuis des interfaces verre-air ou verre-liquide dans le plan d'objet (53), ou près de ce dernier, passe à travers l'ouverture (15) pour former une image sur le détecteur (56),
un élément de source lumineuse (12) comprenant une monture pour une fibre optique (20) connectée à une source lumineuse,
des optiques de focalisation (24) agencés pour focaliser de la lumière, provenant de la fibre optique (20), sur un plan focal arrière de la lentille d'objectif (20), et
un miroir (13) monté sur la partie de support (11) dans une partie de l'ouverture (15), dans lequel le miroir (13) est agencé pour diriger de la lumière depuis la fibre optique (20) vers la lentille d'objectif (50), et le miroir (13) est agencé pour bloquer de la lumière réfléchie pour qu'au moins une partie de l'image formée sur le détecteur (56) soit une zone ombragée (57) dans laquelle l'image est une image sur fond noir rétrodiffusée.

2. Système de microscope selon la revendication 1, dans lequel une première partie de l'image formée sur le détecteur (56) est une zone ombragée (57) dans laquelle l'image est une image sur fond noir rétrodiffusée et une seconde partie de l'image formée sur le détecteur (56) est une zone non ombragée (58) destinée à être utilisée dans une microscopie par réflexion interférentielle à film mince ou microscopie par réflexion à contraste interférentiel.

3. Système de microscope selon la revendication 1, dans lequel l'image formée sur le détecteur (56) est une zone ombragée (57) dans laquelle l'image est une image sur fond noir rétrodiffusée.

4. Système de microscope selon l'une quelconque des revendications précédentes, dans lequel la monture est ajustable relativement à la partie de support (11).

5. Système de microscope selon l'une quelconque des revendications précédentes, comprenant en outre une source lumineuse couplée à l'élément de source lumineuse (12) de l'adaptateur par une fibre optique (20).

6. Système de microscope selon l'une quelconque des revendications précédentes, dans lequel le miroir (13) est monté à approximativement 45° par rapport à la partie de support (11).

7. Système de microscope selon l'une quelconque des revendications précédentes, dans lequel le miroir comprend une tige (18) ayant une surface d'extrémité réfléchissante inclinée.

8. Système de microscope selon l'une quelconque des revendications précédentes, dans lequel le miroir (13) est supporté sur un bras s'étendant depuis une paroi de l'ouverture (15).

9. Système de microscope selon l'une quelconque des revendications précédentes, dans lequel la partie de support (11) a un canal de faisceau (16) s'étendant longitudinalement par rapport à la partie de support (11), depuis l'élément de source lumineuse (12) jusqu'à l'ouverture (15), et aligné avec le miroir (15) pour faire passer de la lumière depuis l'élément de source lumineuse (12) jusqu'au miroir (13).
